# EUROPEAN PATENT APPLICATION

(11) **EP 0 745 636 A2**
(43) Date of publication of application: **04.12.1996**
(21) Application number: 96107070.3
(22) Date of filing: 06.05.1996
(51) Int. Cl.: C08J 5/12, B29C 65/06

(54) **Dynamic welding of fluoropolymers**

(30) Priority: 08.05.1995 US 437200; 27.10.1995 US 549585
(71) Applicant: E.I. DU PONT DE NEMOURS AND COMPANY, Wilmington Delaware 19898 (US)
(72) Inventor: Baumann, Maurice Armand, Wilmington, Delaware 19898 (US); Van Hoeven, William, Jr., Swarthmore, Pennsylvania 19081 (US)
(74) Representative: Abitz, Walter, Dr.-Ing.

(57) **Abstract**

Fluoropolymer shapes can be joined by dynamic welding if at least one of the shapes is impregnated with adjuvant; said adjuvant is high-boiling, highly-fluorinated, polycyclic alkane.

## Description

### RELATED APPLICATION

This application is a continuation-in-part of pending application Serial No. 08/437,200, filed May 8, 1995.

### FIELD OF THE INVENTION

This invention is in the field of fluoropolymers, specifically pertaining to the joining of solid fluoropolymer pieces together.

### BACKGROUND OF THE INVENTION

Various dynamic methods of joining plastic components are well known. These methods include, for example, ultrasonic welding and spin welding. A summary of dynamic welding techniques is included in "Module I: General Design Principles" of the "Design Handbook for DuPont Engineering Polymers" (DuPont Company, 1992). As discussed therein, these techniques commonly involve bringing two plastic shapes together under controlled pressure and causing relative motion between the shapes. The heat generated melts the plastic at the interface between the shapes, whereupon the motion is then stopped and the molten plastic solidifies to complete the weld.

Such techniques have not been employed with fluoropolymers with commercial success. While certain melt-fabricable fluoropolymers were previously known to form bonds by spin welding under certain conditions, such procedures generally require relatively long times and yield relatively weak welds with substantial resin flash at the weld line. The reason or reasons for lack of success in utilizing dynamic welding methods with fluoropolymers are not well understood, but may involve the low coefficient of friction and/or the low surface energy generally characteristic of fluoropolymers.

Cavanaugh & Tuminello in U.S. Patent 5,237,049 disclose a static process for adhering a fluoropolymer surface to another surface, comprising coating the fluoropolymer surface with a perfluorinated cycloalkane (or a solution of fluoropolymer in cycloalkane), contacting the coated fluoropolymer surface with another surface, and then applying pressure for a period of time to force the surfaces together at an elevated temperature below the perfluorinated cycloalkane's atmospheric pressure boiling point. Preferably, the other surface is also fluoropolymer, mole preferably the same fluoropolymer. In the examples of the invention, fluoropolymer films 0.125 mm and 0.25 mm thick were coated and bonded to similar films or to aluminum plates. Bonding times of 3-10 min are disclosed.

A satisfactory method of rapidly joining fluoropolymer shapes together is desired.

### SUMMARY OF THE INVENTION

This invention provides a dynamic welding method of joining one fluoropolymer shape to another fluoropolymer shape, in which each shape has a surface that makes conforming contact with a surface of the other shape, comprising impregnating the region of the surface to be joined of at least one of the fluoropolymer shapes with adjuvant for dynamic welding, bringing the surfaces to be joined into conforming contact under pressure, and then rapidly moving the surfaces relative to each other until a bond is formed. Preferred adjuvants include high-boiling, highly-fluorinated, polycyclic alkane.

Mere coating of one or both surfaces to be joined with adjuvant does not produce the dynamic welding effect achieved by impregnation.

### DETAILED DESCRIPTION OF THE INVENTION

It has been discovered that fluoropolymer shapes that do not bond together by dynamic welding techniques, or form only poor bonds by such techniques, can be joined together to obtain good bond strength by dynamic welding techniques if at least the surface region of at least one of the shapes to be joined is impregnated with adjuvant prior to the dynamic welding procedure. In addition to providing a much quicker joint, this has the advantage over prior art techniques for joining fluoropolymer shapes of not requiring restraining devices and of not requiring heating of an entire shape. These advantages can be significant, especially if one or both of the shapes is large. As will be shown by examples below, impregnation of at least one shape with adjuvant enables dynamic welds to be formed in welding cycles that produce no weld, or very weak weld, for equivalent shapes that are not impregnated with adjuvant. By using adjuvant, the dynamic welding process of this invention can produce joints having strength comparable to the strength of the fluoropolymers shapes joined.

The dynamic welding method of this invention introduces the use of adjuvant into dynamic welding procedures. The adjuvant is an adjuvant in that it facilitates formation of a joint by dynamic welding techniques, but is not an adhesive. Generally, the dynamic method of this invention for joining one fluoropolymer shape to another fluoropolymer shape includes the steps of (a) impregnating the region of the surface to be joined of at least one of the fluoropolymer shapes with adjuvant, (b) bringing the surfaces to be joined into conforming contact under pressure, (c) causing the surfaces to move rapidly relative to each other to cause melting of fluoropolymer at the interface between the shapes, (d) stopping the relative motion, and (e) maintaining pressure until the molten fluoropolymer solidifies to complete a joint.

Preferred impregnating adjuvants that can be used in the process of this invention include high-boiling, highly-fluorinated, polycyclic alkane. By high boiling is meant a boiling point of at least about 280°C at atmospheric pressure. The boiling point may be the lower end of a boiling range. "Highly-fluorinated" as used herein means that the ratio F/H is at least 100.

The impregnating adjuvant used in this invention includes complex mixtures of highly-fluorinated aliphatic cyclic structures, herein called "fluoroalicyclic oligomer" or sometimes just "oligomer", that can be obtained as high-boiling byproduct of the fluorination of compounds having cyclic, preferably polycyclic, carbon skeletons using CoF₃ and fluorine according to British Patent 1,281,822. The structures can have perfluoroalkyl side chains. When the crude product is refined by fractional distillation, the high-boiling byproduct fraction is obtained. This higher boiling fraction, designated "fluoroalicyclic oligomer" or "oligomer" herein, has been found to be useful as an impregnating adjuvant for fluoropolymers to be dynamically welded by the process of this invention. The fluoroalicyclic oligomer can be further refined or fractionated if desired.

A preferred fluoroalicyclic oligomer is the high-boiling byproduct of the fluorination of phenanthrene to produce perfluorotetradecahydrophenanthrene, C₁₄F₂₄ (formerly by Rhone-Poulenc Chemicals, now by BNFL Fluorochemicals). When phenanthrene is thus fluorinated, the high-boiling fraction (oligomer) obtained upon fractional distillation of the crude liquid product has a boiling range of about 280°-400°C at atmospheric pressure. As synthesized, oligomer is reported to contain small amounts of hydrogen and olefinic carbon. Post-treatment with fluorine to further fluorinate the highly-fluorinated oligomer is believed to reduce significantly, but not eliminate, the unsaturation and hydrogen content. The fluoroalicyclic oligomer derived from the fluorination of phenanthrene is herein designated "phen-oligomer" to indicate its source.

The characterization of a fluorine-treated sample of phen-oligomer. is described in some detail in U.S. Patent 5,356,986. That particular sample was a viscous, transparent, colorless substance that boiled at about 322°C. Room-temperature viscosity is usually so high that the substance will not pour, remaining essentially undeformed when the container is tilted for several minutes. The material flows easily at about 60°C. Higher-boiling fractions are more viscous, and the highest-boiling fractions are glasses at room temperature, but flow readily at about 100°C. At high temperature, the viscosity of phen-oligomer is quite low. For example, at about 170°C and above, viscosity is typically comparable to the viscosity of water.

Adjuvants used in the process of this invention can contain dissolved fluoropolymer. This is particularly beneficial when the fluoropolymer shapes to be joined are made from polytetrafluoroethylene (PTFE) and the dissolved fluoropolymer is melt-fabricable. Such solutions are disclosed, for example, by Tuminello & Cavanaugh in U.S. Patent 5,328,946.

Fluoropolymers that can be joined by the method of this invention are polymers of at least one flurorinated monomer, but may incorporate monomers containing no fluorine. The fluorinated monomers are usually selected from the group consisting of fluoroolefins and fluorinated vinyl ethers of the formula CY₂=CYOR or CY₂=CYOR'OR wherein Y is H or F, and -R, and -R'- are independently completely-fluorinated or partially-fluorinated alkyl and alkylene groups containing 1-8 carbon atoms. Preferred -R groups contain 1-4 carbon atoms and are preferably perfluorinated. Preferred -R'- groups contain 2-4 carbon atoms and are preferably perfluorinated. Such fluoropolymers can be melt-fabricable or non-melt-fabricable. Melt-fabricable fluoropolymer resins are usually considered to be extrudable or injection-moldable. As such, they have melt viscosity of up to about 1 x 10⁵ Pa·s as customarily measured. Resins having higher viscosity are usually regarded as non-melt-fabricable. Preferred fluoropolymers include the group of tetrafluoroethylene (TFE) polymers. Preferred TFE polymers include perfluoropolymers, particularly copolymers of TFE and one of more of perfluoroolefins having 3-8 carbon atoms, especially hexafluoropropylene (HFP), and perfluoro(alkyl vinyl ethers) having alkyl groups containing 1-5 carbon atoms, especially 1-3 carbon atoms. Preferred fluoropolymers also include melt-fabricable copolymers of ethylene and TFE or chlorotrifluoroethylene, which copolymers can also contain up to 10 mol% of one or more additional monomers. Mixtures of compatible fluoropolymers can also be used.

Fluoropolymer resins used in the practice of this invention can contain additives as known in the art, including pigments or fillers.

Fluoropolymer resin shapes can be impregnated with adjuvant by any convenient means. One way is to immerse a fluoropolymer shape in liquid adjuvant. This method, herein sometimes described as "imbibing", is particularly advantageous and is preferred. Imbibing is a simple procedure to carry out, and can if desired or convenient be applied only to the region of a shape that is to be joined to another shape. That is, it is not necessary to immerse the entire shape in adjuvant, but only part of the shape having the surface to be bonded. The temperature of the adjuvant for imbibing is desirably sufficiently high that the viscosity of the adjuvant is low and can rapidly penetrate the fluoropolymer shape. When adjuvant is high-boiling, highly-fluorinated polycyclic alkane, the adjuvant temperature is usually at least 100°C, desirably at least 150°C. The time of immersion of the fluoropolymer shape in adjuvant will vary with adjuvant temperature and the rate at which the particular fluoropolymer shape imbibes adjuvant at the chosen temperature, and is therefore adjustable to some degree. Imbibing times in the range 20 sec to 20 min are suitable, 2 min to 10 min especially convenient and preferred for reasons of convenience. The amount of adjuvant imbibed by the fluoropolymer shape will depend at least on imbibing time, imbibing temperature, the particular fluoropolymer, the particular adjuvant, and the depth to which the shape is immersed in the adjuvant. If the entire shape is immersed in adjuvant, the amount of adjuvant imbibed as indicated by weight increase of the shape can be quite high, for example 20% or more. On the other hand, if the shape has thick sections, or if only pall of the shape is immersed in adjuvant, or if the exposure time is short so that the depth of impregnation of adjuvant into the shape is relatively small, the amount of adjuvant imbibed based on the weight of entire shape can be quite low, as low as 1% or even as low as 0.1% or possibly even less. The entire volume of the fluoropolymer shape need not be impregnated. It is only necessary for the surface region to be joined to be impregnated. The depth of impregnation necessary to obtain a good dynamic weld is not known. However, mere surface deposition of adjuvant appears to be ineffective in promoting dynamic welding.

Dynamic welding techniques known in the art can be employed in the dynamic welding process of this invention. Preferred techniques include vibrational welding and spin welding.

Normally, the shapes to be joined by the dynamic welding process of this invention are fabricated to final or near-final dimensions prior to the welding, though post-welding finishing operations, or even extensive subsequent operations, can be carried out. One advantageous use of dynamic welding is as an assembly technique.

In general, the conforming surface of each shape to be joined should be composed of chemically similar fluoropolymer, though the chemical composition and viscosity (or molecular weight) need not be identical. For example, if two pieces made from TFE/HFP copolymer are to be joined, the copolymers in the two pieces could be different grades having different HFP contents and different melt viscosities. Furthermore, the fluoropolymers to be joined need not be generically the same, as in the preceding illustration of differing grades of TFE/HFP copolymer, provided they are otherwise sufficiently similar. In particular, perfluoropolymers having differing constituents can be joined by the dynamic welding process of this invention, such as TFE/PPVE copolymer and TFE/HFP copolymer.

The time required to form a joint by the dynamic welding process of this invention will vary with a number of factors, including fluoropolymer composition, relative speed of motion, and pressure applied during the joining process. Desirably, joints are formed in less than 10 sec. For spin welding, joints are desirably formed in less than 5 sec.

It will be understood that the entire shape to be joined need not be made from fluoropolymer, but at least a portion of the shape to be joined will be made from fluoropolymer, said portion having the conforming surface to be joined. That is, a shape may be a composite made from two or more materials, at least one of which is fluoropolymer. For example, a shape could be composed of a fluoropolymer piece attached to a metal piece.

The conforming surfaces are not necessarily limited to the region of contact. That is, they need not have exactly the same dimensions, in that one could be more extensive than the other. E.g., two sheets can be joined, the edge of one to face of other. E.g., and end of a tubular shape can be joined to an extended flat surface. The surfaces to be joined need not be planar. It is only necessary that they conform, and have contours appropriate to the relative motion applied by the dynamic technique employed, as known in the art. For example, if one surface is convex the other must be concave, or if one is S-shaped the other must have the shape of a backward S. If spin welding is the method to be used, the conforming surfaces must have axial symmetry, or if linear motion is to be applied in vibrational welding, the surfaces will be such as to permit linear relative motion in at least one direction.

### EXAMPLES

Unless otherwise specified, the vibrational welding tests summarized in the examples below were carried out according to the following general procedure, using a Model 2400 Vibrational Welder (Branson Ultrasonics Corp.). Specimens used were flat strips, i.e., rectangular solids, approximately 1 inch (2.54 cm) wide, 0.125 inch (0.32 cm) thick, and 3-6 inch (7.6-15.2 cm) long. These strips were used to form butt joints, with no special attention to joint design. One strip was clamped in a lower stationary clamp attached to the horizontal table, with the large surface of the strip in a vertical plane and the long dimension of the strip horizontal. A second strip was placed on top of the first strip, with the large surface of the second strip horizontal and with the long dimension of this strip generally parallel to the long dimension of the first strip. A piece of sandpaper was affixed to the lower surface of the upper platten attached to an oscillating mechanism that vibrated the upper platten in a horizontal direction. The table was raised to bring the strip assembly into contact with the upper platten with a force of about 315 lb (143 kg). The upper platten was then vibrated linearly, with direction of vibration parallel to the long dimension of the first (stationary) strip, with an amplitude of 0.030-0.070 inch (0.76-1.8 mm) at a frequency of 240 Hz for several seconds as stated in the individual examples. The sandpaper provided the necessary coupling between the upper platten and the second strip, so that the second strip moved with the upper platten. After vibration was stopped, the contact force was maintained for a time equal to the vibrating time to allow molten fluoropolymer to solidify, and then the sample was removed. Thus, a successful weld resulted in a structure having the shape of an extended T, with a long edge of one strip welded to a large surface of the second strip.

When the vibrational welding test employed one strip that was impregnated with adjuvant and one strip that was not impregnated, the two pieces were randomly placed in the welding unit, that is, without regard as to which of the strips was clamped in the stationary clamp and which was driven by the vibrating platten.

Vibrational welds were tested by applying moderate hand force so as to stress the weld in rotation about the weld line as axis. If the weld withstood this force, it was rated as a good weld (G). If a weld broke, it was designated as a failure (F), as was a test in which the strips were not joined at all.

Fluoropolymer shapes were prepared for dynamic welding tests by soaking in adjuvant at elevated temperatures for times of the order of a few minutes as detailed in the individual examples. Room-temperature shapes were introduced into the hot adjuvant. For vibrational welding, test strips were completely immersed in the adjuvant. For spin welding, test pieces were only partially immersed. After the soak period, shapes were lifted from the adjuvant reservoir and drained, and excess adjuvant was wiped off the surface.

### Example 1

This example illustrates spin welding by the method of this invention, using a Model 2S10BP Precision Spin Welder (Midtech Systems, Inc.). Flat-bottomed cup-shaped pieces were machined from 2.5-inch (6.4-cm) diameter rod made from TFE/PPVE copolymer resin (Teflon® PFA fluoropolymer resin grade 340, DuPont Company). The rim of each cup had diameter of about 2.1 inch (5.3 cm), wall thickness of about 0.08 inch (2.0 mm), and was machined to have a wedge-shaped profile. Generally flat circular lids for the cups were machined with an axial hole and with an indented wedge-shaped profile near the edge on one surface to conform to the profile on the rim of the cups. Cups were inverted and placed in a bath of phen-oligomer at 252°C, so that the rim and part of the side wall were immersed, for 10 min. Cups, which initially weighed about 19 g, gained about 3% in weight due to imbibed oligomer. Lids were not impregnated with adjuvant. For spin welding, a cup was placed rim up in a stationary urethane rubber fitting and a lid was placed in mating position on the cup. A spindle rotating at 4200 rpm and having a urethane rubber fitting conforming to the lid was lowered into contact with the lid with a force of about 365 lb (165 kg) to drive (spin) the lid relative to the cup for 1.2 sec. The friction/interference fit of the urethane rubber fittings provided sufficient coupling with the fluoropolymer shapes to spin the lid and restrain the cup. After spindle rotation was stopped, contact force was maintained for 1.2 sec before the sample was removed from the apparatus. Weld lines essentially free from flash were obtained. A welded cup/lid unit was placed in a pipe-like fixture so that the unit was supported by the over-hanging edge of the lid. A push rod was inserted through the hole in the lid against a metal disc that had been placed in the bottom of the cup before welding, and force to break the weld by pushing down on the rod was applied using a tensile testing machine. Welds having strengths of 400 lb/in (462 kg/cm) and more than 600 lb/in (693 kg/cm) were obtained. Weld strengths are the forces required to break the weld in tension divided by the circumference of the cup. Only a lower limit for weld strength was obtained in the second test because the welded unit pulled out of the test fixture before weld failure. When the cup was not impregnated with adjuvant, no weld was formed in 1.2 sec. When spinning time was extended to 6 sec, still no weld was formed.

### Example 2

The procedure of Example 1 was repeated except that the rod stock for machining was made from a copolymer of ethylene, TFE and a minor amount of PFBE (Tefzel® ETFE fluoropolymer resin grade 200, DuPont Company). A metal disc was not placed in the bottom of the cup before spin welding, which prevented quantitative measurement of weld strength. Weight gain for an ETFE cup having initial weight of 15 g was about 3%. Spin welding gave, in 1.2 sec of spinning, a weld line that was essentially free from flash and a sound cup/lid unit that could not be broken apart by hand. When the cup was not impregnated with adjuvant, no weld was formed in 1.2 sec. When spinning time was extended to 6 sec, a weld with significant flash was formed.

### Examples 3-5

Vibrational welding tests, using the general procedure described above, were carried out for strips cut from injection molded plaques of the melt-fabricable fluoropolymer resins used in Examples 1 & 2 and from a TFE/HFP copolymer (Teflon® FEP fluoropolymer resin grade 100, DuPont Company). In these examples, vibrating contact time was 6-7 sec and only one strip in each welding pair was immersed in phen-oligomer for 10 min at the temperature given in Table 1. Weight gain (ΔWt) due to imbibed adjuvant is also given, if determined. Good welds were obtained in all three instances, even though the joint was a simple butt joint.

**Table 1**

| **Impregnation for Examples 3-5** | | | |
|---|---|---|---|
| Ex. | Polymer | T (°C) | ΔWt (%) |
| 3 | PFA | 260 | 3 |
| 4 | FEP | 200 | --- |
| 5 | ETFE | 260 | 5-6 |

### Examples 6-8

A finely-divided PPVE-modified, non-melt-fabricable TFE polymer resin (modified PTFE) prepared by the suspension polymerization process generally as described by Doughty & Sperati in U.S. Patent 3,855,191 was used. The modified PTFE was blended with melt-fabricable PFA fluoropolymer granules, prepared generally according to the process comprising coagulation of dispersion, heat hardening, and fluorine treatment disclosed in European Patent 0 226 668, in the weight proportions given in Table 2. The resulting blends were formed into sheets between 0.125 inch (3.2 mm) and 0.25 inch (6.4 mm) thick by compacting the resin in a laboratory press at room temperature under a pressure of 2500 psi (1.7 MPa). The sheets were transferred to a circulating air oven and sintered at 380°C for 0.5 hr using the sintering cycle of ASTM D-4894 Procedure B. Strips were cut from the sheets, some of which were immersed in phen-oligomer at 320°C for 6 min. Average weight gain due to imbibed adjuvant is shown in the table. Vibrational welding tests, using the general procedure described above, were carried out on various combinations of impregnated strips and strips not exposed to adjuvant. Welds were rated as good (G) or as failures (F) according to the hand stress test outlined above. Results, also shown in Table 2, illustrate that the dynamic welding method of this invention can be used to join shapes made from non-melt-fabricable perfluorinated copolymers and from fluoropolymer blends.

**Table 2**

| **Compositions and Welding Results for Examples 6-8** | | | |
|---|---|---|---|
| **Polymer used (wt parts)** | 6 | 7 | 8 |
| Modified PTFE | 100 | 95 | 90 |
| PFA granules | --- | 5 | 10 |

| **Adjuvant imbibing** | | | |
|---|---|---|---|
| Weight gain (%) | 17 | 15 | 19 |

| **Vibrational welding** | | | |
|---|---|---|---|
| Welding time (sec) | 6 | 4 | 4 |

| **Weld quality (strip/strip)** | | | |
|---|---|---|---|
| Not imbibed/Not imbibed | F | F | F |
| Not imbibed/Imbibed | G | G | G |
| Imbibed/Imbibed | G | F | G |

### Example 9

Vibrational welding tests, using the general procedure described above, were carried out for strips cut from injection molded plaques of the TFE/PPVE copolymer resin (PFA) used in Example 1 and from the TFE/HFP copolymer resin (FEP) used in Example 4. Some of these strips were immersed in phen-oligomer adjuvant for 10 min at 260°C (PFA) or at 175°C (FEP). Weight gains were 6-8% for PFA and 2-3% for FEP. Vibrational welding tests were carried out using one PFA strip and one FEP strip. Vibrating contact time was 6 sec. When both strips were impregnated with adjuvant, a good weld was formed. When only the PFA strip or only the FEP strip was impregnated, a joint did not form in 6 sec.

### Control Demonstration

Two strips cut from injection molded plaques of the TFE/PPVE copolymer resin (PFA) used in Example 1 were immersed briefly in a 50 wt% solution of phen-oligomer in perfluorotetradecahydrophenanthrene (Flutec® PP-11, Rhone-Poulenc) at room temperature, then removed and drained. Excess solution was wiped off with a paper towel and the PP-11 was allowed to evaporate. The vibrational welding procedure described above, with 6 sec of vibrating time, produced a "tack" weld that broke easily under hand force. The broken weld area had many fine fibers at the edges of a groove where the two pieces were in contact.

### Example 10

A finely-divided, non-melt-fabricable, unmodified PTFE resin (Teflon® TFE fluoropolymer resin grade 7A, DuPont Company) prepared by the suspension polymerization process was used. The PTFE resin was formed into sheets 0.125 inch (3.2 mm) and 0.25 inch (6.4 mm) thick by compacting the resin in a laboratory press at room temperature under a pressure of 2500 psi (1.7 MPa). The sheets were transferred to a circulating air oven and sintered at 380°C for 0.5 hr using the sintering cycle of ASTM D-4894 Procedure B. Strips 0.75 inch (1.9 cm) wide were cut from the sheets for vibrational welding tests by the general procedure outlined above, except that a groove 0.125 inch wide and 0.188 inch (4.8 mm) deep was cut in the 0.25-inch-thick strip, which was 2.75 inch (6.9 cm) long and was used in the horizontal position. The 0.125-inch-thick strip, which was 2.5 inch (6.4 cm) long, was used in the vertical position and was positioned in the groove in the horizontal piece for the test. The vertical piece (only) was completely immersed in phen-oligomer containing dissolved melt-fabricable TFE/PPVE copolymer resin (Teflon® PFA fluoropolymer resin grade 350, DuPont Company) at 320°C for 20 min. The concentraton of PFA resin in the solution was 5 wt%, based on combined weight of resin and phen-oligomer. Weight gain due to imbibed adjuvant solution was 10% and 9% for two specimens. Vibrational welding time was 6 sec. Good bonds were formed, in that neither bond was broken under moderate hand force as described above. These results show that the dynamic welding method of this invention can be used to join shapes made from non-melt-fabricable perfluorinated polymers.

## Claims

1. A dynamic method of joining one fluoropolymer shape to another fluoropolymer shape, in which each shape has a surface that makes conforming contact with a surface of the other shape, comprising (a) impregnating the region of the surface to be joined of at least one of said fluoropolymer shapes with adjuvant for dynamic welding, (b) bringing said surfaces to be joined into conforming contact under pressure, (c) causing said surfaces to move rapidly relative to each other to cause melting of fluoropolymer at the interface between said shapes, (d) stopping the relative motion, and (e) maintaining pressure until molten fluoropolymer solidifies to complete a joint.

2. The method of Claim 1, wherein said adjuvant is high-boiling, highly-fluorinated, polycyclic alkane.

3. The method of Claim 2, wherein said polycyclic alkane is fluoroalicyclic oligomer.

4. The method of Claim 3, wherein said fluoroalicyclic oligomer is phen-oligomer.

5. The method of Claim 1, wherein the fluoropolymer of at least one of said fluoropolymer shapes is melt-fabricable.

6. The method of Claim 5, wherein said melt-fabricable fluoropolymer is copolymer of ethylene and tetrafluoroethylene or chlorotrifluoroethylene.

7. The method of Claim 5, wherein said melt-fabricable fluoropolymer is perfluoropolymer.

8. The method of Claim 7, wherein said perfluoropolymer is tetrafluoroethylene copolymer.

9. The method of Claim 8, wherein said copolymer is copolymer of tetrafluoroethylene and one or more of hexafluoropropylene and perfluoro(alkyl vinyl ethers) having alkyl groups containing 1-5 carbon atoms.

10. The method of Claim 1, wherein said fluoropolymer is non-melt-fabricable tetrafluoroethylene copolymer.

11. The method of Claim 1, wherein said method is spin welding.

12. The method of Claim 1, wherein said method is vibrational welding.

13. The method of Claim 1, wherein the fluoropolymer of at least one of said fluoropolymer shapes is polytetrafluoroethylene.

14. The method of Claim 13, wherein the fluoropolymer of each of said fluoropolymer shapes is polytetrafluoroethylene.

15. The method of Claim 13, wherein said adjuvant contains dissolved melt-fabricable fluoropolymer.
